(19) Europäisches Patentamt

European Patent Office

Office européen des brevets

(11) **EP 4 585 297 A1**

(12) **EUROPEAN PATENT APPLICATION**

(43) Date of publication:
16.07.2025 Bulletin 2025/29

(21) Application number: 25000003.1

(22) Date of filing: 14.01.2025

(51) International Patent Classification (IPC):
**B01D 53/85** (2006.01)

(52) Cooperative Patent Classification (CPC):
**B01D 53/85;** B01D 2257/708

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.01.2024 IN 202411002844**

(71) Applicant: **Council Of Scientific & Industrial
Research
New Delhi 110 001 (IN)**

(72) Inventor: **Kundu, Partha
695019 Thiruvananthapuram (IN)**

(74) Representative: **Graf von Stosch
Patentanwaltsgesellschaft mbH
Prinzregentenstraße 22
80538 München (DE)**

(54) **MODULARIZED GAS BIO-TRICKLING FILTER DEVICE AND METHOD FOR EFFICIENT VOC (VOLATILE ORGANIC COMPOUND) AND ODOUR TREATMENT**

(57) The present invention relates to the innovatively designed gas bio-trickling filter (g-BTF) process for polluted air purification mainly focusing on the treatment of VOCs and odour using low-cost filter media (agricultural waste i.e., wood char coal and other waste i.e., sludge, compost etc.) which is cheap and readily available. The current invention uses a consortium of the microorganisms including *Rhodococus sp., Paracocus sp, Microbacterium sp., Mutant Paracocus Denitrificans sp.* The consortium approach ensures a broader range of VOC degradation capabilities, allowing for efficient removal of multiple compounds simultaneously. This versatility makes biotrickling filters highly adaptable to different industrial settings, such as paint manufacturing plants or automotive facilities. The present invention as compared to other process (thermal and chemical process) developed BTF process associated with the lowest operating and maintenance costs. Overall VOC and odour removal efficiency of g-BTF unit is 99.9%.

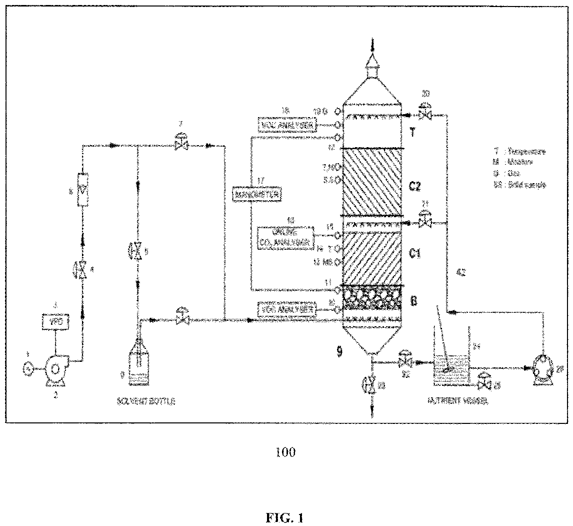

FIG. 1

EP 4 585 297 A1

**Description**

**FIELD OF THE INVENTION**

The invention provides an apparatus for purifying Volatile Organic Compounds and odour control enriched air stream. Large amounts of organic solvents are used in automotive painting booths. On average, more than 6 kg of volatile organic compounds (VOCs) are used as paint solvents per vehicle in typical automotive plants with solvent based coatings. The metals and plastics used for automobiles have been painted for both decoration and protection against corrosion. The paints used contain organic polymers and solvents. These compounds can be photo-chemically reactive and can negatively affect local air quality. The solvents contribute to air pollution, as volatile organic compounds (VOCs), when emitted during painting operations. Commonly used solvents in solvent-based paints include: aromatic hydrocarbons, aliphatic hydrocarbons, esters, ketones, alcohols, and glycolethers. VOCs have been the focus of environmental concern and regulated for two basic reasons: human health issues due to some VOCs being toxic and ozone formation through photochemical reactions with NOx. Other than solvent-based paints, water-based paints and powdered paints have been used. However, water-based paints are not organic solvent free and still contain a significant amount of organic solvents along with the water. Organic solvents are also hydrophilic in nature, e.g., alcohols, ketones, and glycolethers, etc., compared to those in solvent-based paints that contain a significant portion of hydrocarbons, such as toluene and xylenes. Similarly, pungent /foul odour emission from automobile spray painting units and flour mills during spice grinding causes serious environmental problem.

Automobile spray painting units and allied industry (i.e., flour mills etc.) causes VOC and odour emission in several parts of the state. As far as we know, there is no emission factor data available on odour and VOC emissions from such MSMs. The control of VOC and odour emissions will become an increasingly important issue. The lack of emission factor data will hamper the selection and design of all types of air pollution control systems, leading to installation of ineffective and inappropriate devices. Therefore, a detail study is required to develop emission factors for these two MSMEs and further development of pollution control device to mitigate the environmental issue.

Traditional methods used to control VOC emissions, such as selective catalytic and non-catalytic reduction, usually require high temperatures and the use of chemicals and catalysts, therefore resulting in high costs and generation of secondary pollutants; in this framework, biological methods represent a promising alternative.

**BACKGROUND OF THE INVENTION**

VOCs are a group of organic compounds that are difficult to handle, as are aliphatic and aromatic organic compounds and the emissions of volatile organic compounds (VOCs) are now an evolving ecological concern (Maurer and Koziel, 2019; Vergara-Fernandez et al., 2020). Industrial processes, automotive emissions, and solvent use are among the key sources of VOC emissions. Many chemical compounds are formed from human activities and are distinct by their solubility in water, concentration or availability differentials, and reactivity levels (Guo et al., 2017). VOCs contained inside the gases can react with each other, subject to chemical changes, modify one another's properties, and affect bioavailability and hence the rate of biodegradation. The major VOCs present in the atmosphere produced mainly from the painting, chemical, and petrochemical industries are benzene, toluene, ethylbenzene, and xylene (Akmirza et al., 2017).

In recent years, people are more aware of the possible health and ecological risks that are caused by industrially produced chemical pollutants and it eventually leads to the development of stricter rules and regulations in volatile organic compound (VOC) production, the discharge of harmful chemical contaminants, especially volatile organic compounds (VOCs), has been a major problem worldwide. Paint sprays exhaust gas includes VOCs such as benzene, toluene, ethylbenzene, and xylene (BTEX) and also other complex compounds such as chlorinated benzene and toluene, all of which can cause greater harm to humans (Zhang et al., 2016; Dobslaw and Engesser, 2019). The indiscriminate emission of huge quantities of exhaust gas from paint spray often harms the ambient atmosphere. Therefore, effective technologies for the treatment of paint spray exhaust gas and its effects must be needed. Numerous technologies for the removal of VOCs have recently been established in response to increasing concern about the issue. As conventional pathways for the treatment of VOCs, physical, chemical, and biological strategies have been used (Kasperczyk et al., 2019; Lin et al., 2019). As state-of-the-art technique, thermal combustion processes are conventionally used in fields of industrial application which is energy intensive. In contrast biofilters are energy. While thermal combustion processes are characterized by both high construction costs (14.52-29.04 \$.m$^{-3}$ of treated gas) and operating costs (1.70-8.70 \$.1,000 m$^{-3}$) and bioprocesses are low-cost processes with costs of 2.84 - 17.01\$.m$^{-3}$ and 0.14 - 0.87\$.1,000 m$^{-3}$, respectively (Estrada et al., 2011). Biological techniques such as bio-trickling filter (BTF) can be used, due to their cost-effectiveness and environmental-friendliness. Considering the thread of the emissions resulting from the incineration, the developed bio-trickling filter (BTF) have been regarded as an efficient, cost-effective, alternative biological cleaner production process for the treatment and control of air pollution.

## OBJECTIVES OF THE INVENTION

The main objective of the present invention to provide an environmentally friendly inexpensive and highly effective process for control of VOC and odour.

It is another objective of the present invention to provide a device for deodorization of air utilizing biofilter system where pressure loss during passage of air is low.

It is yet another objective of this invention to provide a device for deodorization of air, which is able to retain and provide large moisture content for support of growth of micro-organisms.

It is yet another objective of this invention to develop a new application for an agricultural and solid waste which, at present, incurs disposal costs.

All the above objectives are achieved by the developing of a modular g-BTF using eco-friendly packing media. Still another object of this invention to provide a BTF process for deodorization of air which is able to Sustain activity for a long duration without compaction, ageing and pressure build-up. This object is achieved by passing contaminated air through a specially design compartmentalized packing bed which providing support for microbial growth.

## BRIEF DESCRIPTION OF THE DRAWINGS

FIG. 1 is g-BTF process flow diagram for VOC and odour emission control, where 1 represent AC power supply; 2 represent blower; 3 represent VFD; 4, 5, 7, 20, 21, 22, 23, 25 represent control valve; 6 represent solvent (VOC) vessel; 8 represent gas flow meter; 9 represent g-BTF reactor; 10, 18 represent VOC analysis port; 11, 12 represent pressure tap; 13 represent moisture sensor; 14 represent temperature sensor; 15 represent gas analysis port; 16 represent online $CO_2$ analyser; 17 represent manometer; 19 represent gas sampling port; 24 represent circulating nutrient vessel; 26 represent circulating pump, in accordance with the present invention.

FIG. 2 is a schematic 3D cross-sectional view illustrating g-BTF column reactor according to the present invention.

FIG. 3 is a cross-sectional view illustrating the bottom section (B) of g-BTF reactor, where 27 represent restrain clamp; 28 represent orifice distributor; 29 represent shell bed; 30 represent gasket according to the present invention.

FIG. 4 is a cross-sectional view illustrating the first compartment section (C1) of g-BTF reactor, where 31 represent restrain clamp with orifice distributor; 32 represent mesh; 33 represent MPM packing media; 34 represent liquid nozzle distributor according to the present invention.

FIG. 5 is a cross-sectional view illustrating the second compartment section (C2) of g-BTF, where 35 represent restrain clamp; 36 represent mesh; 37 represent carbon based packing media; 38 represent orifice distributor; 39 represent restrain clamp with mesh according to the present invention.

FIG. 6 is a cross-sectional view illustrating the top section (T) of g-BTF reactor, where 40 represent liquid nozzle distributor; 41 represent treat air (clean air) plenum according to the present invention.

FIG. 7 is representing pressure drop profile of g-BTF reactor according to the present invention.

FIG. 8 is representing the mechanism of treatment of VOC enriched gas stream in g-BTF reactor according to the present invention.

FIG. 9 is representing Removal efficiency of VOC mixture in g-BTF reactor according to the present invention.

FIG. 10 is representing Phylogenetic tree of *Paracoccus sp* & *Rhodococcus sp* strains immobilized in MPM packing media used in g-BTF reactor according to the present invention.

## SUMMARY OF THE INVENTION

The invention provides an apparatus (100) for purifying Volatile Organic Compounds and odour control enriched air stream which includes a multistage adsorption column (9) comprising of a sprout shaped bottom section for air inlet (9B), uniform distribution section (28), compartmentalize porous adsorption section (9C1, 9C2), and top air outlet vent (9T) with aqueous medium circulation loop (24).

In an embodiment the invention provides an apparatus (100) wherein the sprout bottom section (9B) connected with an air blower (2), air flow meter (8), control valve (4) with associated line connection (6).

In an embodiment the invention provides an apparatus (100) wherein there is an aqueous recirculation loop (42) for each compartment of the column.

In an embodiment the invention provides an apparatus (100) wherein the recirculation loop is equipped with a pump (26) and valves (20, 22).

In an embodiment the invention provides an apparatus (100) which consists of specially developed packing media embedded with microorganism (MPM) selected from the group comprising of *Rhodococus sp., Paracocus sp., Microbacterium sp., Mutant Paracocus Denitrificans sp.*

In an embodiment the invention provides an apparatus (100) wherein a volatile organic compound active carbon-based adsorption device (9), comprises of: vertically mounted column compartments (9B, 9C1, 9C2, 9T), column internal interlude (28, 29, 31, 32, 35, 36, 38, 39) fixed mounting has the mixed packed media, MPM (mixed with specific cultured microorganism) layered wise, MPM adsorption layer top of the compartment is equipped with the aqueous steam distributor (34, 40).

In an embodiment the invention provides an apparatus (100) wherein the MPM compartment (9C1) and adsorption compartment (9C2) is connected with manifolds (i.e., flange and gasket) and comprises of agricultural biomass waste derived highly porous carbon packing material.

In an embodiment the invention provides an apparatus (100) wherein, it utilizes low cost, highly efficient and eco-friendly packing media (i.e., agricultural waste based) for VOC and odour treatment.

In an embodiment the invention provides a process of treatment of Volatile Organic Compounds and odour enriched polluted air stream comprising the steps of: absorption, biodegradation/biotransformation, diffusion and adsorption.

## DETAILED DESCRIPTION OF THE INVENTION

Based on the field visit and sampling, a lab-scale Biofilter trickling filter (BTF) process has been developed for VOC and odour emission control. The biological treatment utilizes microbes to treat contaminant emitted in the air. Physicochemical and biological phenomena occur simultaneously during the pollutants degradation in the biofilm of a biotrickling filtration system. Biotransformation occurs along with adsorption, absorption and diffusion to remove contaminants from the gaseous stream. In the presence of microorganism mainly bacteria in biofilm will aerobically degrade the targeted pollutant(s).

The system is equipped with the continuous recirculation of the aqueous phase containing the essential inorganic nutrients. The trickling liquid is circulated back to the top of the filter by a centrifugal pump and is homogenously distributed on the top surface of the bed by head spray system. The liquid (nutrient) medium trickled on the filter bed from the top of the bed at a certain fixed rate and polluted gaseous stream is entering from the bottom of the reactor. Based on the field emission data a pilot scale gas Bio-trickling filter (BTF) was developed which is showed in Fig. 1-6. Pressure droop profile of BTF reactor is showed in Fig. 7. Conceptual VOC degradation mechanism occurred in BTF unit is represented in Fig. 8. Physicochemical and biological phenomena occur simultaneously during the VOC degradation in the biofilm of a biotrickling filtration system. Biotransformation occurs along with absorption, adsorption, and diffusion to remove contaminants from the gaseous stream. In the presence of microorganism mainly bacteria in biofilm will aerobically degrade the targeted pollutant(s). Details of BTF reactor is showed in Table 1. Detail characteristics of mixed packed media (MPM) used in the present invention is mentioned in Table 2.

Pilot scale bio-trickling filter setup is equipped with, VFD controller (for controlling air flow rate), Digital manometer (for analyzing pressure drops), Mass flow meter (for regulating inlet flow rate), Rotameter (for regulating volumetric gas flow rate), moisture analyzer (for monitoring moisture content of the biofilter bed), blower, Solvent bottle (for injecting VOC to BTF), VOC meter (for quantifying inlet and outlet pollutant concentration), pump (for feeding nutrients), Bio-trickling filter column, Nutrient vessel (for providing nutrients to the microbes and moisture to the filter bed).

The mixed packing material (MPM) was composed of wood charcoal, mature compost and seed sludge as inoculum. Wood charcoal is a readily available, low cost, and affordable. It is locally available, relatively cheap and easier to handle. Wood charcoal was prepared by control combustion of agricultural waste material (i.e., wood) in between 400-500°C under limited oxygen environment. Seed sludge was collected from a sewage treatment plant in Muttathara, Trivandrum, Kerala (8°27'32.62"N and 76°56'15.08"E). A specific ratio of compost, wood charcoal and sludge was mixed and used for packing media for the biofiltration process. Here wood charcoal acts as the adsorbent as well as supporting media for microbial attachment whereas, sludge will act as the inoculum for biodegradation and finally, mature compost will provide the macro as well as micro nutrients for the microbial growth.

**Table.1. Design specification of Bio-trickling filter**

| Parameter | Value |
|---|---|
| Total height of the BTF reactor | 1.524 m |
| Effective height of the bed | 0.9144 m |
| Thickness of the column | 0.002 m |
| Diameter of the column | 0.3048 m |
| Cross sectional area of the column | 0.0729 m$^2$ |
| Surface area of the column | 2.333 m$^2$ |
| Volume of the bed | 0.666 m$^3$ |
| Empty Bed Residence Time (EBRT) | 120 s |

**Table 2. Characteristics of mixed packed media (MPM)**

| Characteristics | Value |
|---|---|
| Moisture content | 21.84 % |
| pH | 6.7 |
| Total organic carbon | 31.87 % |
| Volatile solids | 64.36% |
| Total dissolved solids | 35.32 ppm |
| Conductivity | 70.66 μS/cm |
| Salinity | 0.03 psu |
| Resistivity | 14.1 K ohm.cm |
| Bulk density | 0.71 g/c$^3$ |
| Particle density | 1.32 g/c$^3$ |
| Porosity | 46.21% |
| Water retention capacity | 88% |

The developed gas bio-trickling filter (BTF) unit is packed with specially prepared agricultural waste based highly porous packing media inoculated with aerobic microbial consortia to treat VOC enriched gas i.e., acetone, 2-butanone, ethyl acetate, methanol, toluene, xylene and six component VOC mixture representative of solvents present in off gases emitted by industrial spray-painting operations. Performance evaluation of g-BTF unit is presented in Table 3. The major findings are mentioned below.

- The suitability, robustness and effectiveness for BTF in VOC abatement have been demonstrated. BTF can be successfully employed to biodegrade VOCs from waste gas streams representative of paint spray booth off-gases. The high performance BTF unit exhibited excellent VOC removal efficiency (RE > 99%).
- When the influent gas stream passes through BTF unit which exhibited stable long-term performance with an average total VOC removal greater than 99% even when operated with an EBRT of 120 s and an average loading rate of 116.52 g m$^{-3}$ h$^{-1}$.
- BTF unit also showed high elimination capacity for all sets of VOC component. Elimination capacity of BTF unit is followed the trends as mentioned below. BTF Elimination Capacity: 2-butanone > toluene > VOC mixture > acetone > xylene > methanol > ethyl acetate> Benzene.
- Growth of diverse micro-organism in the packing media helped to develop a stable and efficient microbial population capable of achieving high VOC removal rates in BTF.
- The developed BTF unit showed good job stabilization which can swiftly conveniently installed at place. Moreover, the reactor dismantling of reactor and change of VOC adsorbent are very convenient to use.

**Table 3: Performance evaluation of g-BTF unit**

| S. No. | VOC components | VOC Removal efficiency (%) | Odour removal efficiency (%) |
|---|---|---|---|
| 1. | Toluene | 99.99 | 99.00 |
| 2. | Benzene | 98.70 | 95.80 |
| 3. | Xylene | 99.99 | 99.99 |

(continued)

| S. No. | VOC components | VOC Removal efficiency (%) | Odour removal efficiency (%) |
|---|---|---|---|
| 4. | 2-butanone | 99.99 | 99.99 |
| 5. | Acetone | 99.99 | 99.99 |
| 6. | Methanol | 99.99 | 99.99 |
| 7. | Ethyl acetate | 99.99 | 99.99 |
| 8. | VOC mixture | 99.99 | 99.99 |

**EXAMPLE**

The invention is described in detail with reference to the examples given below which should not however be construed to limit the scope of the present invention.

The BTF process followed multi-step procedure in which biologically active packed media played an important role for treatment of VOCs and odour. The process of VOC biodegradation in BTF is complexed, which is grouped by spatial scale into the biofilm level, the medium level, and the reactor level. Detail mechanism is showed in Fig. 8. VOC enriched air stream is passed through the mixed packed media which is immobilized with microorganism. Inlet gas stream is passed through the BTF reactor vertically upwards and comes in contact of the outer liquid film of the microbial biofilm in MPM, where absorption of VOCs from (i.e., mass transfer) gas phase to the liquid phase is taking place. The circulating nutrients steam (i.e., liquid phase) is helping the growth of microorganism in MPM. The gas diffuses through the gas -liquid contact interface into the microbial biofilm of MPM. Diffused VOC components (i.e., pollutants) gets adsorbed on the surface of the MPM, where microorganisms biodegraded (i.e., biologically oxidize) the VOC component and bio-transformed into carbon dioxide, water, and biomass. Microorganism immobilised in MPM completely destroy the VOC contaminants and desorbed lean air stream released from the top of the BTF reactor.

MPM was characterized by XRD analysis. The XRD pattern of MPM was showing very sharp and narrow peaks at $2\Theta=26°$, which indicates that the packing material is crystalline in nature. ATR spectra of MPM revealed that, the band visible at 1218 cm$^{-1}$ corresponds to the stretching vibration of the C-O for the carbon monoxide or carbon dioxide derivatives. Table 4 represents the various peaks obtained in the ATR spectra and corresponding functional groups present in the MPM.

**Table 4: Peaks and corresponding functional groups present in the ATR spectra of MPM**

| Peaks (cm$^{-1}$) | Functional group |
|---|---|
| 1581 | C = C |
| 1432 | C- H |
| 1218 | C - O |
| 872 | Aromatic C- H |
| 815 | Aromatic C- H |

The BTF unit has flexible and changeable process, and can adjust and flexibly combine the parameters of each group of process sections according to the incoming material condition of the volatile organic compound so as to adapt to wider working conditions and ensure the effective treatment of the volatile organic compound.

Removal efficiency (*RE*) of BTF unit for different type of VOCs was studied (Table 3). *RE* of each individual VOC tested was used to evaluate the treatment performance of BTF. RE was calculated using eq. (1).

$$RE(\%) = \frac{C_{in} - C_{out}}{C_{in}} \times 100 \qquad (1)$$

VOC mixture consists of toluene, benzene, xylene, 2- butanone, ethyl acetate, methanol and acetone in different ratios. VOC loading rate in the BTF was maintained as 116.55 g.m$^3$. h$^{-1}$. From the Fig. 9, it was found that the removal efficiency of VOC mixture remains constant i.e., 97.4 % over a period of 250 minutes and after 250 minutes the removal rate increased gradually and finally reached the maximum that is 100 % within a time of 600 minutes. Bacteriological assay analysis of microbial consortia used in the BTF unit was analyzed using 16S rRNA sequencing and Phylogenetic tree of *Paracoccus sp* and *Rhodococcus sp* strains were showed in Fig. 10.

## ADVANTAGES OF PRESENT INVENTION OVER THE PRIOR ART

There are several advantages for the present invention over the prior art. Traditional methods used to control VOC emissions, such as selective catalytic and non-catalytic reduction, usually require high temperatures and the use of chemicals and catalysts, therefore resulting in high costs and generation of secondary pollutants; in this framework, biological methods represent a promising alternative. A comparison details is mentioned in Table 5.

### Table 5: Comparison of various process for VOC & odour control

| S. No. | VOC and odour control Method | Suitable for inlet concentration | Equipment cost | Operating cost |
|---|---|---|---|---|
| 1. | Absorption | % Level | Low | Low |
| 2. | Adsorption | ppm | Medium | Medium |
| 3. | Incineration | ppm | High | High |
| 4. | catalytic | ppm | High | High |
| 5. | g-Bio-trickling filter | ppm | Low | Low |

The choice of filtration media in biofiltration systems also played a crucial role in the performance and efficacy of the process. Plastic media, while commonly used, may have limitations due to their low surface area and porosity, which can hinder microbial growth and attachment. Activated carbon layers, although effective in adsorbing pollutants, may impede microbial accessibility to the target compounds (as per reference A2 & A3). Polyether and polyester media offer favorable conditions for microbial colonization due to their high surface area and porosity. However, the hydrophobic nature of these materials may affect moisture retention, impacting microbial activity (as per reference A1). Bio-ceramic media, with their porous structure, show potential for microbial attachment and growth, but careful selection is required to ensure compatibility with microorganisms (as per reference D4). The developed biotrickling filtration (BTF) process for VOC and odour control is eco-friendly and cost effective as the filter media required (i.e., prepared from agricultural waste) is cheap and readily available. Prepared agricultural waste-based media possess a porous structure, which offers a high surface area for microbial attachment and growth. The porosity facilitates the diffusion of volatile organic compounds (VOCs) through the media, enhancing their contact with the microbial consortium. This increased surface area and porosity can lead to improved VOC removal efficiency in biotrickling filters. These materials often contain residual organic matter, minerals, and other nutrients that can support microbial growth and metabolic activity. The availability of nutrients helps sustain the activity of VOC-degrading microorganisms, promoting efficient VOC removal, which is the main advantage of the present invention which was found to be the limitation disclosed in the prior art. As compared to other process (thermal and chemical process) BTF process associated with the lowest operating and maintenance costs. Process does not require periodic replacement of packing elements and periodic regeneration of liquid which make the proposed BTF technology environment-friendly and commercially viable.

## Claims

1. An apparatus (100) for purifying volatile organic compounds and odour control enriched air stream comprising:

    a. a multistage adsorption column (9) having vertically mounted column compartments (9B, 9C1, 9C2, 9T),
    b. wherein a sprout shaped bottom section (9B) for air inlet having an orifice distributor (28); a specially developed mixed packed media (MPM) compartment (9C1), a porous adsorption section (9C2), and a top air outlet vent (9T) with circulating nutrient vessel (24).

2. The apparatus (100) as claimed in claim 1, wherein the sprout bottom section (9B) connected with an air blower (2), air flow meter (8), control valve (4) with associated line connection (6).

3. The apparatus (100) as claimed in claim 1, wherein the sprout bottom section (9B) comprises the bed of biological material (29) as acid neutralizing agent.

4. The apparatus (100) as claimed in claim 1, wherein the bed of biological material (29) comprised of shell bed which is calcium carbonate.

5. The apparatus (100) as claimed in claim 1, further comprises an aqueous recirculation loop (42) for each compartment of the column.

6. The apparatus (100) as claimed in claim 3, wherein the recirculation loop is equipped with a pump (26) and valves (20, 22).

7. The apparatus (100) as claimed in claim 3, wherein the recirculation loop is periodically trickled nutrient solution through the bed (33, 37) which consisting of $Na_2HPO_4$, $K_2HPO_4$, $KH_2PO_4$, $(NH_4)_2PO_4$, $MgSO_4$, $CaSO_4$, $FeSO_4.H_2O$, $C_6H_{12}O_6$.

8. The apparatus (100) as claimed in claim 1, wherein MPM is embedded with microorganism is selected from the group consisting of *Rhodococus sp., Paracocus sp., Microbacterium sp., Mutant Paracocus Denitrificans sp.*

9. The apparatus (100) as claimed in claim 1, wherein the vertically mounted column compartments (9B, 9C1, 9C2,), further comprises of column internal interlude fixed mountings (28, 29, 31, 32, 35, 36, 38, 39) having the MPM (mixed with specific cultured microorganism) and top of the compartment (9T) is further equipped with the aqueous steam distributor ( 40, 41).

10. The apparatus (100) as claimed in claim 1, wherein the MPM compartment (9C1) and adsorption compartment (9C2) is connected with flange and gasket and further comprises of agricultural biomass waste derived highly porous carbon packing material.

11. The apparatus (100) as claimed in claim 1, wherein, the apparatus utilizes low cost, highly efficient and eco-friendly packing media for volatile organic compounds and odour treatment.

12. A process of treatment of volatile organic compounds and odour enriched polluted air stream comprising the steps of: absorption, diffusion, adsorption and biodegradation/biotransformation.

Europäisches
Patentamt

European
Patent Office

Office européen
des brevets

## EUROPEAN SEARCH REPORT

**Application Number**

EP 25 00 0003

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 669 155 A1 (COMPRIMO BV [NL]; BERGSCHENHOEK CIVIELE TECHNIEK [NL]) 30 August 1995 (1995-08-30) | 12 | INV. B01D53/85 |
| Y | * column 1, lines 1-28; figure 1; example 1 * | 1-11 | |
| Y | KR 102 127 434 B1 (YUSUNG ENG CO LTD [KR]) 26 June 2020 (2020-06-26) * figure 2 * | 1-3,5-7, 9,11 | |
| Y | US 11 338 244 B1 (DAVIS CASEY [US] ET AL) 24 May 2022 (2022-05-24) * claim 1; figure 1A * | 4 | |
| Y | IE 960 338 A1 (BORD NA MONA) 13 November 1996 (1996-11-13) * claims; figures 2,13 * | 4 | |
| Y | US 2003/022360 A1 (RYU HEE WOOK [KR] ET AL) 30 January 2003 (2003-01-30) * paragraphs [0018], [0024] * | 7,10 | |
| Y | KR 2010 0048357 A (Q BIO TECH CORP [KR]) 11 May 2010 (2010-05-11) * the whole document * | 8 | TECHNICAL FIELDS SEARCHED (IPC) B01D |
| Y | CN 109 692 558 A (LONGKUN BEIJING NEW ENVIRONMENTAL TECH CO LTD) 30 April 2019 (2019-04-30) * claim 9 * | 8 | |

The present search report has been drawn up for all claims

| Place of search | Date of completion of the search | Examiner |
|---|---|---|
| The Hague | 23 May 2025 | Gruber, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 00 0003

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2025

| Patent document cited in search report | | Publication date | Patent family member(s) | | Publication date |
|---|---|---|---|---|---|
| EP 0669155 | A1 | 30-08-1995 | DE | 69502313 T2 | 29-10-1998 |
| | | | EP | 0669155 A1 | 30-08-1995 |
| | | | NL | 9400273 A | 02-10-1995 |
| KR 102127434 | B1 | 26-06-2020 | NONE | | |
| US 11338244 | B1 | 24-05-2022 | NONE | | |
| IE 960338 | A1 | 13-11-1996 | NONE | | |
| US 2003022360 | A1 | 30-01-2003 | AU | 2118602 A | 18-06-2002 |
| | | | CN | 1398195 A | 19-02-2003 |
| | | | JP | 3935431 B2 | 20-06-2007 |
| | | | JP | 2004515281 A | 27-05-2004 |
| | | | KR | 20020043830 A | 12-06-2002 |
| | | | US | 2003022360 A1 | 30-01-2003 |
| | | | WO | 0245826 A1 | 13-06-2002 |
| KR 20100048357 | A | 11-05-2010 | NONE | | |
| CN 109692558 | A | 30-04-2019 | NONE | | |

EPO FORM P0459

For more details about this annex : see Official Journal of the European Patent Office, No. 12/82